Europäisches Patentamt

European Patent Office

Office européen des brevets

(19)

(11) Publication number: **0 042 627**
**B1**

(12) **EUROPEAN PATENT SPECIFICATION**

(45) Date of publication of patent specification: **22.01.86**

(21) Application number: **81104905.5**

(22) Date of filing: **25.06.81**

(51) Int. Cl.⁴: **C 08 K 3/22,** C 08 J 3/20,
C 08 L 23/06

(54) **Improved color pigment for use in the production of thermoplastic articles.**

(30) Priority: **25.06.80 US 162956**

(43) Date of publication of application:
**30.12.81 Bulletin 81/52**

(45) Publication of the grant of the patent:
**22.01.86 Bulletin 86/04**

(84) Designated Contracting States:
**DE GB IT NL**

(56) References cited:
**GB-A- 771 955**

**ENCYCLOPEDIA OF POLYMER SCIENCE AND
TECHNOLOGY, vol. 10 1969 John Wiley &
Sons, New York, US pages 163-169**

**Lehrbuch der Lacke und Beschichtungen, Band
II, 1974, Verlag W.A. Colomb in der H.
Heenemann GmbH Berlin-Oberschwandorf,
pages 177, 235, 238, 239**

(73) Proprietor: **Elkem Metals Company
Park West Office Center Cliff Mine Road P.O. Box
266
Pittsburgh Pennsylvania 15230 (US)**

(72) Inventor: **Chopra, Kuldip Singh
4 Driftwood Court
Grand Island, N.Y. 14072 (US)**
Inventor: **Ealer, George Edward
RD Nr. 1
Whitehouse Station New Jersey 08809 (US)**
Inventor: **Salensky, George Anthony
RD Nr. 3
Whitehouse Station New Jersey 08809 (US)**

(74) Representative: **Schwan, Gerhard, Dipl.-Ing.
Elfenstrasse 32
D-8000 München 83 (DE)**

(56) References cited:
**Römps Chemie-Lexikon, 1974, Fränkische
Verlagshandlung, Stuttgart, pages 2061-2066**

**Kunststoff-Lexikon, 1975, Carl Hanser Verlag,
München, pages 305, 306**

## Description

The present invention relates to the production of thermoplastic articles and particularly colored thermoplastic films such as those used in the manufacture of trash bags and the like. More specifically, the invention relates to improved color concentrates for use in producing colored thermoplastic articles.

In the production of thermoplastic colored films by conventional methods, a color concentrate containing one or more pigments is mixed together with a thermoplastic resin usually in the form of resin pellets while heating the mixture to elevated temperatures in order to melt the resin pellets and to disperse the color pigments substantially uniformly throughout the resin (GB—A—771 955). An essential requirement of the color concentrate is that it must contain color pigments which are stable and which will not break down at the temperatures contemplated. This is important not only from the standpoint of maintaining good color integrity but also to prevent the occurrence of defects in the film itself. For example, yellow iron oxide ($Fe_2O_3.H_2O$) is a common pigment used to produce brown or tan colored plastic film for making trash bags and the like. It looses water of hydration at about 200°C. When a thermoplastic film containing this pigment is extruded at temperatures which exceed this decomposition temperature, defects are apt to occur in the film. The defects occur mainly in the form of minute bubbles which result from the water of hydration or moisture that is liberated upon dehydration of the pigment.

The extent to which the defects are likely to occur in the film can be determined by so-called "ash test" wherein a pigment is heated to its decomposition temperature and the percent of residue or ash is then measured. Generally, if a pigment has a high percentage of ash, the losses or volatiles will be less and consequently there will be fewer defects formed in the film. Since it is sometimes desirable or necessary to extrude many of the newly developed thermoplastic resins at high temperatures, the need for improved color pigments having high decomposition temperatures as well as high percentages of ash will be evident.

Other metal oxides which have been used for colouring thermoplastic resins include red iron oxide, brown iron oxide, black iron oxide, anhydrous chromium oxide green ($Cr_2O_3$), hydrated chromium oxide green ($Cr_2O_3 \cdot 2H_2O$), red lead oxide ($Pb_3O_4$), cobalt aluminates and nickel titanate (Encyclopedia of Polymer Science and Technology, Vol. 10, 1969, John Wiley & Sons, New York, USA, pages 163—169). Furthermore it is known to use manganese dioxide as pigment in heat resistant varnishes and synthetic resins (Lehrbuch der Lacke und Beschichtungen, Vol. II, 1974, Verlag W. A. Colomb in der Heenemann GmbH, Berlin-Oberschwandorf, page 238 and Römpps Chemie-Lexikon, 1974, Franckh'sche Verlagshandlung, Stuttgart, pages 2061—2063).

It is an important object of the present invention to provide an improved method for producing colored thermoplastic articles and particularly colored thermoplastic films such as used in making trash bags and the like, wherein a thermoplastic resin is mixed together with at least one color pigment having good thermal stability and then heated to elevated temperatures to melt the resin and to uniformly disperse the pigment.

Another object of the present invention is to provide an improved color concentrate containing at least one color pigment having a high decomposition temperature and an ash percentage which is greater than that of iron oxide pigments conventionally employed in the prior art.

In conformity with the present invention a method for producing colored thermoplastic articles comprising mxing and heating a thermoplastic resin and at least one color pigment in order to melt the thermoplastic resin and to uniformly disperse the color pigment throughout the resin, and then shaping the thermoplastic resin into the finished article, is characterized in that the color pigment is added to the thermoplastic resin in the form of a color concentrate containing from 20 to 50% by weight of the thermoplastis resin, from 10 to 70% by weight of manganese oxide fume containing at least 96% by weight of manganese oxide, and from 0 to 70% by weight of additional pigments, antioxidants and a dispersion agent, and that the mixture is heated to temperatures of at least 315°C.

Furthermore a color concentrate for use in the production of colored thermoplastic articles according to the present invention is characterized in that it contains from 20 to 50% by weight of thermoplastic resin, from 10 to 70% by weight of manganese oxide fume containing at least 96% by weight of manganese oxide and from 0 to 70% by weight of additional pigments, antioxidants and a dispersion agent.

The present invention is based upon the discovery that pure manganese oxide or a material containing predominantly manganese oxide in a finely-divided or comminuted state is an ideal color pigment for use in those applications where conventional iron oxide pigments have heretofore been employed in the production of colored thermoplastic articles and particularly colored thermoplastic films. It has been found, for example, that finely-divided manganese oxide when used as a color pigment exhibits basically the same color pigmentation as "yellow" or "tan" iron oxide pigments of the prior art, while at the same time the manganese oxide pigment is more stable (i.e. it has a decomposition temperature of about 316°C) and has an ash percentage of not less than about 99%. Consequently, when used as a color pigment to replace conventional iron oxides, extrusion temperatures can be used which are far in excess of those now commonly employed.

It is desirable that the manganese oxide used as the color pigment should have a finely-divided or comminuted particle size. For example, the particle size of the manganese oxide used in the production of thermoplastic film should be less than about 2 μm. This is important in order to uniformly disperse the pigment throughout the resin and also to obtain the desired degree of opacity. In molding applications for making other thermoplastic articles, a larger particle size can be tolerated although it is desirable from the standpoint of opacity to employ as small a particle size as possible. Generally, a range of particle size of between 0.1 and 5 μm is satisfactory in these applications.

The manganese oxide ($Mn_3O_4$) fume is produced as a by-product in electro-metallurgical furnaces conventionally employed in the production of manganese metal. The fume is easily recovered from the exhaust of such furnaces by conventional recovery apparatus.

Typically $Mn_3O_4$ fume contains from about 96% to 98% by weight pure manganese oxide, the balance being a mixture which includes calcium oxide, magnesium oxide, potassium oxide and silica with less than about 1% by weight of free manganese metal. The average particle size of the fume is about 90% below 2 μm, the balance being in the range of between about 2 and 5 μm.

The manganese oxide pigment can be used with a variety of thermoplastic resins for producing colored thermoplastic articles and in particular opaque plastic films such as conventionally used in the manufacture of trash bags and the like. For instance, the pigment can be employed with polyolefin resins such as polyethylene and polypropylene, as well as polyesters, polyamides and polysulfone.

The manganese oxide pigment is added to the base resin, if desired, in conventional extrusion apparatus, in the form of a color concentrate. The manganese oxide pigment and other additives are predispersed in the concentrate and the concentrate assures a uniform distribution of all the additives throughout the thermoplastic resin.

A typical color concentrate for use with a polyethylene resin base, for example, would be as follows:

| Weight % | Ingredient |
| --- | --- |
| 49.35 | Polyethylene resin |
| 0.15 | Antioxidant |
| 30.00 | Manganese oxide fume pigment |
| 20.00 | $TiO_2$ pigment |
| 0.5 | Dispersion agent |

Titanium oxide ($TiO_2$) as well as other known pigments including iron oxide if desired, may be used in conjunction with the manganese oxide pigment of the present invention in various amounts in order to attain the desired tint or color. Basically, the manganese oxide pigment yields a distinctive brown or tan color which is more yellowish and darker than the standard "yellow" iron oxide pigment. The addition of $TiO_2$ to the pigment tends to lighten the basic color depending on the amount that is used. Conversely, the color of the manganese oxide pigment can be substantially darkened by the addition of carbon black which is also a known pigment in the prior art. In fact, these two pigments are used in standard "tint" and "shade" tests to determine the adaptability of a given pigment to color modification. The amount of various pigments used in the color concentrate will depend upon the particular color or tint to be attained. Generally, the color concentrate contains from 10% to 70% by weight of the manganese oxide pigment, the balance being composed mostly of the basic resin and other color modifying pigments such as $TiO_2$.

The color concentrate of the present invention may also contain an antioxident such as tetrakis (methylene 3-(3′,5-di-t-butyl-4′-hydroxyphenyl) propionate) methane-Irganox® 1010-Ciba Geigy, butylated hydroxy toluene or alkylated diphenolics. The purpose of the antioxident is to prevent degradation of the polymer at elevated temperatures.

A dispersion agent may also be used in the color concentrate in order to assure that all of the pigments are uniformly dispersed throughout the concentrate and resin. A suitable dispersion agent may be, for example, aluminum tristearate.

It will be evident, of course, that when other oxide pigments are employed such as $TiO_2$, they should also have a finely-divided or a comminuted particle size, preferably less than about 2 μm in the case of thermoplastic films. Also, as noted, the manganese oxide pigment of the present invention may also be used in combination with various types of iron oxide pigments, i.e. yellow or red iron oxide. However, care should be taken to determine that the particular extrusion temperatures used do not exceed the decomposition temperature of the iron oxide pigment.

The shaped colored thermoplastic article made in accordance with the present invention will generally contain from about 0.1 to 20% by weight of the manganese oxide pigment. The thermoplastic articles may be shaped by extrusion or by molding procedures well known in the art.

In an example of the present invention, plastic film was extruded using a conventional extrusion apparatus and a polyethylene resin base containing finely-divided manganese oxide ($Mn_3O_4$) fume as a pigment. The pigment imparted to the film a very distinctive brown color which was yellowish and darker than standard yellow iron oxide. It was also found that the manganese oxide pigment dispersed quite readily throughout the film resin. The film was also tested for opacity.

The opacity of the film produced with the manganese oxide pigment was found to be slightly lower than that of film made with standard yellow iron oxide but was acceptable. The manganese oxide fume pigment was also subjected to standard ash tests wherein the pigment was fired at temperatures of about 316°C and the residue analyzed. It was found that the manganese oxide fume had an ash percent of about 99.85% which compares quite favorably to the ash percent of standard yellow iron oxide e.g. about 88%. Thus the manganese oxide pigment can be used in high temperature extrusion processes for producing thermoplastic articles or film where it has not heretofore been possible to employ other pigments, such as yellow iron oxide, which decompose at lower temperatures and yield a high percentage of volatiles (e.g. water of hydration) on the order of 10—15%. The manganese oxide pigment was also subjected to standard color mass tone and tint test and was found to be quite readily adaptable to color modification by the addition of other pigments such as $TiO_2$.

**Claims**

1. A method for producing colored thermoplastic articles comprising mixing and heating a thermoplastic resin and at least one color pigment in order to melt the thermoplastic resin and to uniformly disperse the color pigment throughout the resin, and then shaping the thermoplastic resin into the finished article, characterized in that the color pigment is added to the thermoplastic resin in the form of a color concentrate containing from 20 to 50% by weight of the thermoplastic resin, from 10 to 70% by weight of manganese oxide fume containing at least 96% by weight of manganese oxide, and from 0 to 70% by weight of additional pigments, antioxidants and a dispersion agent, and that the mixture is heated to temperatures of at least 315°C.

2. A color concentrate for use in the production of colored thermoplastic articles, characterized in that it contains from 20 to 50% by weight of thermoplastic resin, from 10 to 70% by weight of manganese oxide fume containing at least 96% by weight of manganese oxide and from 0 to 70% by weight of additional pigments, antioxidants and a dispersion agent.

**Patentansprüche**

1. Verfahren zum Herstellen von gefärbten thermoplastischen Gegenständen, bei dem ein thermoplastisches Harz und mindestens eine Farbpigment gemischt und erhitzt werden, um das thermoplastische Harz zu schmelzen und das Farbpigment in dem Harz gleichmäßig zu dispergieren, und bei dem dann das thermoplastische Harz zu dem fertigen Gegenstand geformt wird, dadurch gekennzeichnet, daß das Farbpigment dem thermoplastischen Harz in Form eines Farbkonzentrats zugesetzt wird, das von 20 bis 50 Gew.% des thermoplastischen Harzes, von 10 bis 70 Gew.% Manganoxid-Flugstaub mit mindestens 96 Gew.% Manganoxid, und von 0 bis 70 Gew.% weitere Pigmente, Antioxidationsmittel und eine Dispersionsmittel enthält, und daß das Gemisch auf Temperaturen von mindestens 315°C erhitzt wird.

2. Farbkonzentrat zur Verwendung beim Herstellen von gefärbten thermoplastischen Gegenständen, dadurch gekennzeichnet, daß es von 20 bis 50 Gew.% thermoplastisches Harz, von 10 bis 70 Gew.% Manganoxid-Flugstaub mit mindestens 96 Gew.% Manganoxid und von 0 bis 70 Gew.% zusätzliche Pigmente, Antioxidationsmittel und ein Dispersionsmittel enthält.

**Revendications**

1. Procédé de production d'articles thermoplastiques colorés, comprenant les étapes consistant à mèlanger et à chauffer une résine thermoplastique avec au moins un pigment coloré, pour faire fondre la résine thermoplastique et disperser uniformément le pigment coloré dans toute la résine, puis à mettre en forme la résine thermoplastique pour lui donner la forme de l'article terminé, procédé caractérisé en ce que le pigment coloré est ajouté à la résine thermoplastique sous la forme d'un concentré coloré contenant: de 20 à 50% en poids de résine thermoplastique, de 10 à 70% en poids de vapeurs d'oxyde de manganèse, contenant au moins 96% en poids d'oxyde de manganèse, et de 0 à 70% en poids de pigments additionnels, d'anti-oxydants et d'agent de dispersion, le mélange étant chauffe à des températures d'au moins 315°C.

2. Concentré coloré destiné à être utilisé dans la production d'articles thermoplastiques colorés, concentré caractérisé en ce qu'il contient: de 20 à 50% en poids de résine thermoplastique, de 10 à 70% en poids de vapeurs d'oxyde de manganèse, contenant au moins 96% en poids d'oxyde de manganèse, et de 0 à 70% en poids de pigments additionnels, d'anti-oxydants et d'agent de dispersion.